# EUROPÄISCHE PATENTSCHRIFT

(11) **EP 2 284 061 B1**
(45) Veröffentlichungstag und Bekanntmachung des Hinweises auf die Patenterteilung: **17.04.2013**
(21) Anmeldenummer: 10008213.0
(22) Anmeldetag: 06.08.2010
(51) Int. Cl.: B62B 3/06, B62B 5/06

(54) **Vorrichtung zur Erfassung einer vertikalen Deichselstellung eines Flurförderzeugs**
Device for detecting the vertical position of a tiller arm of an tiller truck
Dispositif de détection d'une position de timon verticale d'un transpalette

(30) Priorität: 14.08.2009 DE 102009038652
(43) Veröffentlichungstag der Anmeldung: 16.02.2011
(73) Patentinhaber: Jungheinrich Aktiengesellschaft, 22047 Hamburg (DE)
(72) Erfinder: Lohmann, Helmut, 27404 Nartum-Gyhum (DE); Röder, Matthias, 22523 Hamburg (DE)
(74) Vertreter: Mönkemeyer, Philipp

(56) Entgegenhaltungen:
- WO-A1-2010/045135
- DE-A1-102004 034 742
- DE-A1-102007 047 838
- DE-T2- 60 215 021
- FR-A- 1 172 898

## Beschreibung

Die Erfindung betrifft eine Vorrichtung zur Erfassung einer vertikalen Deichselstellung eines Flurförderzeugs mit einer an einem Deichselbock angelenkten Deichsel, die gegenüber dem Deichselbock um eine horizontale Achse schwenkbar ist, einem Sensor zur berührungslosen Erfassung der Position eines Gegenstücks, wobei der Sensor bezüglich des Deichselbocks und das Gegenstück bezüglich der Deichsel fest angeordnet ist oder umgekehrt und der Sensor eine aktive Sensorfläche auf weist, an der das Gegenstück bzw. die an dem Gegenstück bei einer Bewegung der Deichsel gegenüber dem Deichselbock vorbeigeführt wird.

Die Deichsel eines deichselgeführten Flurförderzeugs dient zum Steuern und Führen des Flurförderzeugs. Ein seitliches Bewegen der Deichsel bewirkt eine Lenkbewegung eines mit der Deichsel verbundenen, um eine vertikale Achse schwenkbaren Rades. Zusätzlich zu dieser Schwenkbewegung der Deichsel um eine vertikale Achse ist die Deichsel um eine horizontale Achse schwenkbar gelagert, so dass der Deichselkopf in unterschiedlicher Höhe angeordnet werden kann. Mit der vertikalen Deichselstellung ist die Stellung der Deichsel bezüglich der Schwenkbewegung um diese horizontale Achse gemeint.

Eine Erfassung der vertikalen Deichselstellung kann insbesondere dazu dienen, eine Bremsung/Blockierung eines Fahrantriebs in Abhängigkeit von der Deichselstellung zu schalten. Beispielsweise kann eine Aktivierung des Fahrantriebs nur zwischen einer vorgegebenen unteren und einer vorgegebenen oberen Deichselstellung ermöglicht werden. Dadurch wird der Fahrantrieb oberhalb der oberen Deichselstellung, insbesondere in einer vollständig hochgeklappten Stellung der Deichsel, und unterhalb der unteren Deichselstellung, insbesondere in waagrechter Anordnung, deaktiviert. Der Fahrantrieb ist dann nur aktivierbar, wenn die Deichsel von einem Benutzer in einem bestimmten Höhenbereich gehalten wird.

Zur Erfassung der vertikalen Deichselstellung ist aus dem Stand der Technik sowohl die Verwendung berührungsloser als auch berührender Sensoren bekannt. Bei berührenden Sensoren ist immer eine mechanische Kopplung zwischen zwei Elementen notwendig, die sich in Abhängigkeit von der Deichselstellung relativ zueinander bewegen. Derartige berührende Sensoren können sehr einfach aufgebaut und besonders kostengünstig sein. Sie unterliegen jedoch immer einem gewissen Verschleiß, der zum Ausfall der Sensorfunktion führen und einen hohen Reparaturaufwand mit sich bringen kann.

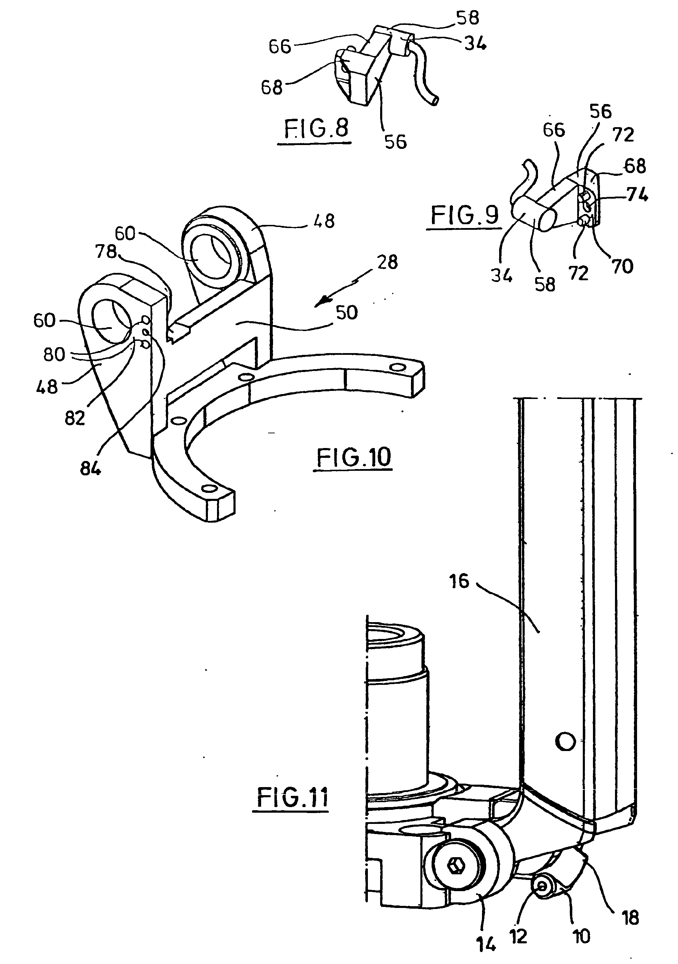

Störungsunempfindlicher sind berührungslose Sensoren, die die Deichselstellung erfassen, ohne dass sich relativ zueinander bewegte Teile berühren. Eine bekannte Vorrichtung zur Erfassung einer vertikalen Deichselstellung mit einem berührungslosen Sensor ist in den Figuren 11 bis 13 gezeigt. Diese hat als berührungslosen Sensor einen induktiven Sensor 10 mit einer kreisförmigen aktiven Sensorfläche 12 an seinem vorderen Ende. Der Sensor 10 ist an einem Deichselbock 14 befestigt. Eine Deichsel 16 ist um eine horizontale Achse schwenkbar an dem Deichselbock 14 angelenkt. Ebenfalls um die horizontale Achse schwenkbar angeordnet ist ein scheibenförmiges Gegenstück 18, das bezüglich der Deichsel 16 fest angeordnet ist. Bei einer Bewegung der Deichsel 16 gegenüber dem Deichselbock 14 wird das Gegenstück 18 an dem Sensor 10 vorbeigeführt.

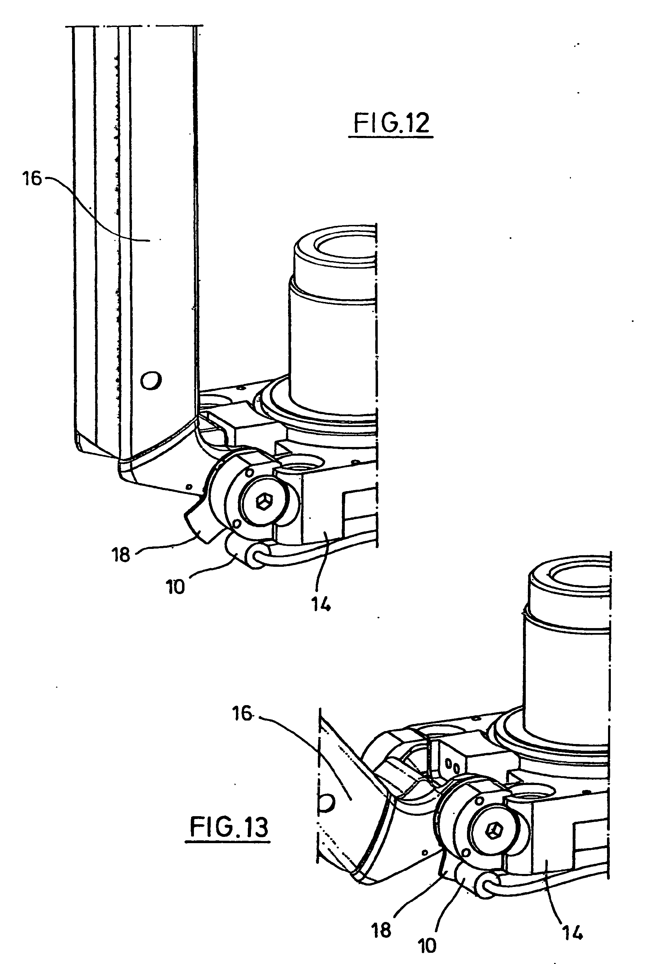

In der in den Figuren 11 und 12 gezeigten Stellung der Deichsel 16 befindet sich das Gegenstück 18 in einem seitlichen Abstand von der aktiven Fläche 12 des Sensors. In dieser Stellung spricht der Sensor 10 nicht auf das Gegenstück 18 an, und eine Steuerung des Flurförderzeugs kann auf Grundlage eines Signals des Sensors den Fahrantrieb des Flurförderzeugs deaktivieren.

In der in der Fig. 13 gezeigten Anordnung der Deichsel 16 in mittlerer Höhe befindet sich das Gegenstück 18 in geringem Abstand vor der aktiven Fläche 12 des Sensors 10, ohne jedoch den Sensor 10 zu berühren. In dieser Stellung spricht der Sensor 10 auf das Gegenstück 18 an und gibt ein entsprechendes Ausgangssignal ab, das von der Steuerung ausgewertet wird und zu einer Aktivierung des Fahrantriebs führt.

Bei der bekannten Vorrichtung befindet sich zwischen der aktiven Fläche 12 des Sensors 10 und dem Gegenstück 18 bzw. dessen Bewegungsebene ein Spalt, der senkrecht zu der horizontalen Achse angeordnet ist, um die die Deichsel 16 geschwenkt wird.

DE 602 15 021 T2 ist eine gattungsgemäße Vorrichtung bekannt.

Davon ausgehend ist es die Aufgabe der Erfindung, eine Vorrichtung zur Erfassung einer vertikalen Deichselstellung eines Flurförderzeugs zur Verfugung zu stellen, mit der die Deichselstellung genauer und reproduzierbarer erfasst werden kann.

Diese Aufgabe wird gelöst durch die Vorrichtung mit den Merkmalen des Anspruchs 1.

Die Vorrichtung hat
- eine an einem Deichselbock angelenkte Deichsel, die gegenüber dem Deichselbock um eine horizontale Achse schwenkbar ist, und
- einen Sensor zur berührungslosen Erfassung der Position eines Gegenstücks, wobei
- der Sensor bezüglich des Deichselbocks und das Gegenstück bezüglich der Deichsel fest angeordnet ist oder umgekehrt und
- der Sensor eine aktive Sensorfläche aufweist, an der das Gegenstück bzw. die an dem Gegenstück bei einer Bewegung der Deichsel gegenüber dem Deichselbock vorbeigeführt wird, wobei
   eine Flächennormale der aktiven Sensorfläche bezüglich der horizontalen Achse radial angeordnet ist.

Die Erfindung beruht auf der Erkenntnis, dass die Einhaltung eines vorgegebenen, möglichst geringen Abstands zwischen Sensor und Gegenstück die Genauigkeit und Reproduzierbarkeit der Erfassung der Deichselstellung verbessern kann und dass das unvermeidliche Spiel des Lagers der Deichsel in dem Deichselbock in radialer Richtung der Schwenkachse geringer ist als in axialer Richtung. Während sich bei der aus dem Stand der Technik bekannten Anordnung das Spiel des Lagers in der Axialrichtung unmittelbar auf den Abstand zwischen Gegenstück 18 und Sensor 10 auswirkt, führt eine Relativbewegung der Deichsel gegenüber dem Deichselbock in Richtung der Schwenkachse bei der erfindungsgemäßen Anordnung lediglich zu einer seitlichen Verschiebung des Gegenstücks gegenüber der aktiven Sensorfläche, was insbesondere bei in Richtung der Schwenkachse ausreichend groß bemessenem Gegenstück weitaus geringeren Einfluss auf das Signal des Sensors hat.

Die aktive Sensorfläche des Sensors ist diejenige Fläche, die bei der bestimmungsgemäßen Verwendung des Sensors dem Gegenstück zugewandt ist und in deren Bereich der Sensor die höchste Empfindlichkeit aufweist. Je nach Funktionsprinzip des Sensors kann beispielsweise ein elektrisches oder magnetisches Feld, dessen Eigenschaften durch das Gegenstück beeinflusst werden, auf einen Raumbereich vor der aktiven Fläche des Sensors konzentriert sein.

Die aktive Fläche des Sensors kann eben oder gekrümmt sein. Im Falle einer gekrümmten aktiven Sensorfläche kann insbesondere die Flächennormale auf einen Mittelpunkt der aktiven Sensorfläche radial bezüglich der horizontalen Achse angeordnet sein, oder es können mehrere oder alle Flächennormalen auf die aktive Sensorfläche radial ausgerichtet sein. Die aktive Sensorfläche kann beispielsweise kreis- oder ringförmig, aber auch rechteckig oder quadratisch sein.

Radial angeordnet bedeutet, dass die "Blickrichtung" des Sensors im Idealfall im rechten Winkel auf die horizontale Achse gerichtet ist. Es ist jedoch auch eine gewisse Abweichung von dieser Idealrichtung umfasst, sofern sich eine Relativbewegung zwischen Deichsel und Deichselbock in Richtung der horizontalen Achse auf den Abstand zwischen aktiver Sensorfläche und Gegenstück nur geringfügig, jedenfalls deutlich geringer als bei einer axialen Anordnung der Flächennormale der aktiven Sensorfläche, auswirkt.

Das Gegenstück ist dasjenige Objekt, auf das der Sensor anspricht. Es kann ein massiver Körper sein, der an der Deichsel bzw. dem Deichselbock befestigt oder darin eingebettet oder integriert ist. Das Gegenstück kann auch eine auf Deichsel bzw. Deichselbock aufgebrachte Beschichtung sein. Das Gegenstück kann insbesondere aus Metall bestehen.

Durch die Erfindung wird das Ansprechen des Sensors vom axialen Lagerspiel der Deichsel nicht oder nur geringfügig beeinflusst, so dass eine genauere und reproduzierbare, insbesondere vom Verschleiß des Lagers der Deichsel weniger abhängige Erfassung der vertikalen Deichselstellung möglich wird.

In einer Ausgestaltung ist der Sensor ein induktiver oder kapazitiver Sensor. Beide Sensortypen ermöglichen eine genaue und zuverlässige Erfassung der Position des Gegenstücks.

In einer Ausgestaltung stellt der Sensor in Abhängigkeit von der vertikalen Deichselstellung ein Ein/Aus-Signal zur Verfügung. Grundsätzlich kann der Sensor die Position des Gegenstücks auch differenzierter erfassen und ein Ausgangssignal liefern, dessen Auswertung eine differenziertere Aussage über den Abstand des Gegenstücks von der aktiven Sensorfläche ermöglicht. Eine derartige Auswertung ist für die dem Sensor nachgeschaltete Steuerung jedoch schwierig und für viele Anwendungen ist ein einfaches Ein/Aus-Signal ausreichend. Der Sensor liefert ein Ein-Signal, wenn ein vorgegebener Abstand zwischen der aktiven Sensorfläche und dem Gegenstück unterschritten, und ein Aus-Signal, wenn ein vorgegebener Abstand zwischen dem Gegenstück und der aktiven Sensorfläche überschritten wird, oder umgekehrt.

In einer Ausgestaltung ist das Gegenstück so geformt und bezüglich des Sensors so angeordnet, dass der Sensor zwischen einer vorgegebenen unteren Stellung der Deichsel und einer vorgegebenen oberen Stellung der Deichsel ein konstantes Ausgangssignal erzeugt. Beispielsweise kann der Sensor zwischen den genannten Deichselstellungen ein Ein-Signal ausgeben. Diese Ausgestaltung bietet sich insbesondere an, um die Vorrichtung zur Aktivierung eines Fahrantriebs einzusetzen, wie einleitend geschildert.

Gemäß einer Ausgestaltung ist eine mit der aktiven Fläche des Sensors zusammenwirkende Fläche des Gegenstücks im gleichen Schritt der mechanischen Bearbeitung der Deichsel bzw. des Deichselbocks herstellbar wie eine weitere Fläche der Deichsel bzw. des Deichselbocks, die die Position der horizontalen Achse bezüglich der Deichsel bzw. des Deichselbocks festlegt. Die mit der aktiven Fläche des Sensors zusammenwirkende Fläche des Gegenstücks ist insbesondere die während des Vorbeiführens des Gegenstücks an dem Sensor bzw. umgekehrt der aktiven Fläche zugewandte Fläche des Gegenstücks. Bei der Fertigung der Deichsel bzw. des Deichselbocks werden unterschiedliche mechanische Bearbeitungsschritte nacheinander an einem Rohteil ausgeführt. Die Bearbeitungsschritte können z.B. durch einen Werkzeugwechsel oder insbesondere ein erneutes Einspannen des Werkstücks voneinander getrennt sein. Die Herstellung der mit der aktiven Fläche des Sensors zusammenwirkenden Fläche des Gegenstücks wird bevorzugt im gleichen mechanischen Bearbeitungsschritt hergestellt, d.h. beispielsweise durch Fräsen aus dem Rohteil herausgebildet, wie eine die Position der horizontalen Achse festliegende weitere Fläche. Bei dieser weiteren Fläche kann es sich insbesondere um eine Bohrung handeln, die die Schwenkachse oder ein Lager hierfür aufnimmt. Durch Herstellen beider Flächen im gleichen Bearbeitungsschritt können unter Einsatz moderner computergesteuerter Fertigungstechniken sehr geringe Toleranzen der beiden Flächen relativ zueinander eingehalten werden. Insbesondere können sich Fehler während des Spannens des Werkstücks nicht auf die relative Anordnung auswirken. Diese geringen Fertigungstoleranzen wirken sich positiv auf die mit der Vorrichtung erreichbare Genauigkeit der Erfassung der Deichselstellung aus. Hierdurch ist es insbesondere möglich, bei der Montage der Vorrichtung auf ein gesondertes Justieren des Gegenstücks zu verzichten.

Gemäß einer Ausgestaltung sind das Gegenstück und ein Fuß der Deichsel bzw. das Gegenstück und der Deichselbock einteilig ausgebildet. Deichsel und Deichselbock können grundsätzlich aus mehreren Teilen gefertigt sein. Durch eine einteilige Fertigung eines Fußes des Deichsel, der insbesondere eine Aufnahme für die Schwenkachse oder für ein Lager hierfür umfasst, und des Gegenstücks kann die Anordnung des Gegenstücks bezüglich der horizontalen Achse durch die Geometrie des Werkstücks eindeutig und präzise festgelegt werden. Das gleiche gilt für eine einteilige Fertigung des Gegenstücks mit dem Deichselbock, wobei der Deichselbock insbesondere eine Aufnahme für die Schwenkachse oder ein Lager hierfür umfasst.

In einer Ausgestaltung weist der Deichselbock bzw. die Deichsel bearbeitete Flächen auf, die mit einem Gehäuse des Sensors zusammenwirken, so dass die Position der aktiven Sensorfläche durch die bearbeiteten Flächen eindeutig vorgegeben ist. Auf eine justierbare Verbindung zwischen Sensor und Deichselbock bzw. Deichsel kann verzichtet werden, weil die Position der aktiven Sensorfläche bereits bei der Fertigung des Deichselbocks bzw. der Deichsel, insbesondere beim Herausarbeiten der bearbeiteten Flächen aus einem Rohteil, eindeutig und in der gewünschten Position festgelegt wird.

Gemäß einer Ausgestaltung weisen die bearbeiteten Flächen mindestens eine Positionierbohrung und/oder mindestens einen Positionierstift und eine senkrecht zu der Positionierbohrung und/oder zu dem Positionierstift ausgerichtete Anlagefläche auf. Entsprechend ist vorgesehen, am Gehäuse des Sensors korrespondierende Stifte bzw. Bohrungen vorzusehen, so dass die Position des Gehäuses des Sensors und damit auch der aktiven Sensorfläche durch das Zusammenwirken der Bohrungen und Stifte vorgegeben ist. Die senkrecht ausgerichtete Anlagefläche kann in Anlage mit einer korrespondierenden Fläche des Gehäuses des Sensors gelangen bzw. mit einem gegebenenfalls verwendeten Zwischenstück, so dass die Position des Gehäuses des Sensors in Richtung der Bohrungen und Stifte durch die Anlagefläche begrenzt wird.

Gemäß einer Ausgestaltung sind die bearbeiteten Flächen bei der Fertigung des Deichselbocks bzw. der Deichsel im gleichen Schritt der mechanischen Bearbeitung herstellbar wie eine weitere Fläche, die die Position der horizontalen Achse bezüglich des Deichselbocks bzw. der Deichsel festlegt. Durch diese Maßnahme wird die korrekte Position des Gehäuses des Sensors und damit auch der aktiven Sensorfläche gegenüber der horizontalen Achse festgelegt, insbesondere wie oben bereits erläutert unabhängig von Toleranzen beim Umspannen des Werkstücks.

In einer Ausgestaltung ist die mindestens eine Positionierbohrung und/oder der mindestens eine Positionierstift parallel zu der horizontalen Achse ausgerichtet. Diese Anordnung vereinfacht die Fertigung der genannten Flächen im gleichen Schritt der mechanischen Bearbeitung. Insbesondere wenn die Anordnung der horizontalen Achse durch eine Bohrung für die Achse bzw. ein zugehöriges Lager definiert wird, kann diese beispielsweise unter Verwendung eines Bohrwerks besonders einfach im gleichen Bearbeitungsschritt wie eine in der gleichen Richtung angeordneten Positionierbohrung hergestellt werden.

Die oben genannte Aufgabe wird ebenfalls gelöst durch ein Flurförderzeug, das eine Vorrichtung gemäß einer der vorstehend erläuterten Ausgestaltungen aufweist.

In einer bevorzugten Ausgestaltung des Flurförderzeugs ist eine Bremseinrichtung vorhanden, die ein angetriebenes oder nicht angetriebenes Rad des Flurförderzeugs in Abhängigkeit von einem Ausgangssignal des Sensors bremst. Hierzu kann der Sensor mit einer Steuereinrichtung verbunden sein, die die Bremseinrichtung steuert. Bevorzugt kann die Bremseinrichtung aktiviert werden, wenn sich die Deichsel unterhalb einer vorgegebenen unteren Stellung oder oberhalb einer vorgegebenen oberen Stellung befindet.

In einer weiteren Ausgestaltung des Flurförderzeugs ist eine Steuereinrichtung vorhanden, die einen Fahrantrieb in Abhängigkeit von einem Ausgangssignal des Sensors aktiviert oder abschaltet oder in einer beliebigen anderen Funktion beeinflusst. Aktivieren des Fahrantriebs bedeutet insbesondere, dass der Fahrantrieb durch Betätigen eines Bedienelements eingeschaltet werden kann. Bevorzugt ist der Fahrantrieb durch die Steuereinrichtung aktiviert, wenn sich die Deichsel in dem vorstehend angegebenen Bereich befindet. Alternativ kann der Fahrantrieb abgeschaltet oder für einen definierten Ausrollvorgang bzw. für ein schnelleres Anhalten entgegen der aktuellen Fahrtrichtung angesteuert werden.

Die Erfindung wird nachfolgend anhand eines in zehn Figuren dargestellten Ausführungsbeispiels näher erläutert. Drei weitere Figuren zeigen den Stand der Technik. Im Einzelnen zeigen:
- Fig. 1: eine erfindungsgemäße Vorrichtung in einer perspektivischen Ansicht;
- Fig. 2: einen Querschnitt durch einen Teil der Vorrichtung aus Fig. 1 in einer ersten Deichselstellung;
- Fig. 3: eine perspektivische Ansicht zu dem Querschnitt aus Fig. 2;
- Fig. 4: einen Querschnitt durch einen Teil der Vorrichtung aus Fig. 1 in einer zweiten Deichselstellung;
- Fig. 5: eine perspektivische Ansicht zu Fig. 4;
- Fig. 6: eine weitere perspektivische Ansicht der Vorrichtung aus Fig. 1;
- Fig. 7: den Fuß der Deichsel aus Fig. 6 in einer perspektivischen Ansicht;
- Fig. 8: den Sensor mit Gehäuse der Vorrichtung aus Fig. 6 in einer ersten perspek- tivischen Ansicht;
- Fig. 9: den Sensor mit Gehäuse aus Fig. 6 in einer zweiten perspektivischen Ansicht;
- Fig.: 10 den Deichselbock der Vorrichtung aus Fig. 6 in einer perspektivischen Ansicht;
- Fig. 11: eine aus dem Stand der Technik bekannte Vorrichtung zur Erfassung einer vertikalen Deichselstellung in einer ersten perspektivischen Ansicht;
- Fig. 12: die Vorrichtung aus Fig. 11 in einer zweiten perspektivischen Ansicht;
- Fig. 13: die Vorrichtung aus Fig. 11 in einer weiteren perspektivischen Ansicht bei einer anderen Stellung der Deichsel.

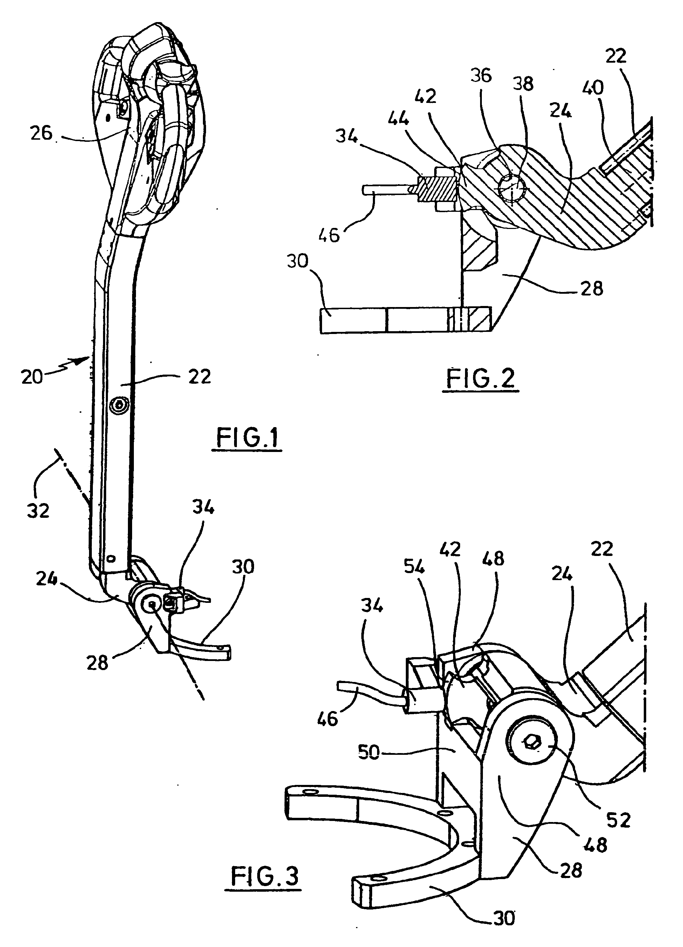

Die Vorrichtung aus Fig. 1 hat eine Deichsel 20 in Form eines Rohrs mit rechteckigem Querschnitt 22, in dessen unteres Ende ein Deichselfuß 24 eingesetzt ist. Am oberen Ende des Rohrs 22 befindet sich ein Deichselkopf 26, der einen bügelförmigen Griff und mehrere Bedienelemente aufweist.

Weiterhin umfasst die Vorrichtung einen Deichselbock 28. Der Deichselbock weist einen etwa halbkreisförmigen, unteren Abschnitt 30 auf, der mit einer nicht dargestellten, um eine vertikale Achse schwenkbaren Lenkeinheit, die ein lenkbares Rad umfasst, verbindbar ist. Die Deichsel 20 ist um die gestrichelt angedeutete, horizontale Achse 32 gegenüber dem Deichselbock 28 schwenkbar. Ferner ist am Deichselbock 28 ein Sensor 34 befestigt.

Fig. 2 zeigt im Querschnitt den Deichselfuß 24 der Deichsel 20 sowie ein unteres Ende des Rohrs 22 der Deichsel 20. Der Deichselfuß 24 weist eine horizontal angeordnete Bohrung 36 auf, durch die eine Schwenkachse 38 hindurchgeführt ist.

Der Deichselfuß erstreckt sich in bezogen auf die Bohrung 36 annähernd radialer Richtung in einer ersten Richtung zu einem gegenüber der Radialrichtung geneigten Steg 40, der in das Rohr 22 eingreift. In der entgegen gesetzten Richtung ist einteilig mit dem Deichselfuß 24 ein Gegenstück 42 ausgebildet, dessen Position von dem Sensor 34 erfasst wird. Weiterhin ist in der Figur der Sensor 34 im Querschnitt erkennbar, der an dem Deichselbock 28 befestigt ist und mit einer aktiven Fläche 44 dem Gegenstück 42 zugewandt ist. Ausgehend von dem Sensor 34 erstreckt sich ein Anschlusskabel 46, das zur Verbindung mit einer Steuereinrichtung vorgesehen ist. In der Fig. 3 ist der Deichselbock 28 genauer erkennbar. An dem halbkreisförmigen Abschnitt 30 sind zwei scheibenförmige Halterungen 48 ausgebildet, die sich nach oben erstrecken und von einer Querstrebe 50 verbunden sind. Die scheibenförmigen Halterungen 48 weisen jeweils eine Bohrung auf, durch die die Schwenkachse 38 hindurch geführt ist, deren äußeren Enden jeweils einen in der Fig. 3 sichtbaren Schraubkopf 52 aufweisen. In der Fig. 3 ebenfalls gut erkennbar ist die Scheibenform des Gegenstücks 42, die senkrecht zur horizontalen Achse 32 bzw. zur Schwenkachse 38 angeordnet ist. Ferner weist das Gegenstück eine Fläche 54 auf, die mit der aktiven Fläche 44 des Sensors 34 zusammenwirkt. Diese Fläche 54 des Gegenstücks 42 ist gekrümmt und verläuft auf einer gedachten Zylindermantelfläche um die horizontale Achse 32 bzw. die Schwenkachse 38 herum. Die Breite der Fläche 54 in Richtung der horizontalen Achse 32 entspricht der Dicke des scheibenförmigen Gegenstücks 42. Die Länge der Fläche 54 in Umfangsrichtung des gedachten Zylindermantels bzw. der von dieser Länge überstrichene Winkel definiert den Winkelbereich der Deichsel, in dem der Sensor das Gegenstück 42 erfasst. Die Fläche 54 des Gegenstücks 42 ist der aktiven Fläche 44 des Sensors 34 zugewandt und wird bei einer Bewegung der Deichsel 22 an dieser vorbeigeführt, wobei sie sich stets in einem gleichmäßigen, geringen Abstand von der aktiven Sensorfläche 44 befindet.

In der in den Figuren 2 und 3 dargestellten Stellung der Deichsel 22 befindet sich der Deichselkopf 26 in einer mittleren, leicht von einem Benutzer des Flurförderzeugs zu ergreifenden Höhe. In dieser Stellung der Deichsel 20 ist das Gegenstück 42 vor der aktiven Sensorfläche 44 angeordnet, so dass der Sensor 34 auf die Gegenwart des Gegenstücks 22 anspricht.

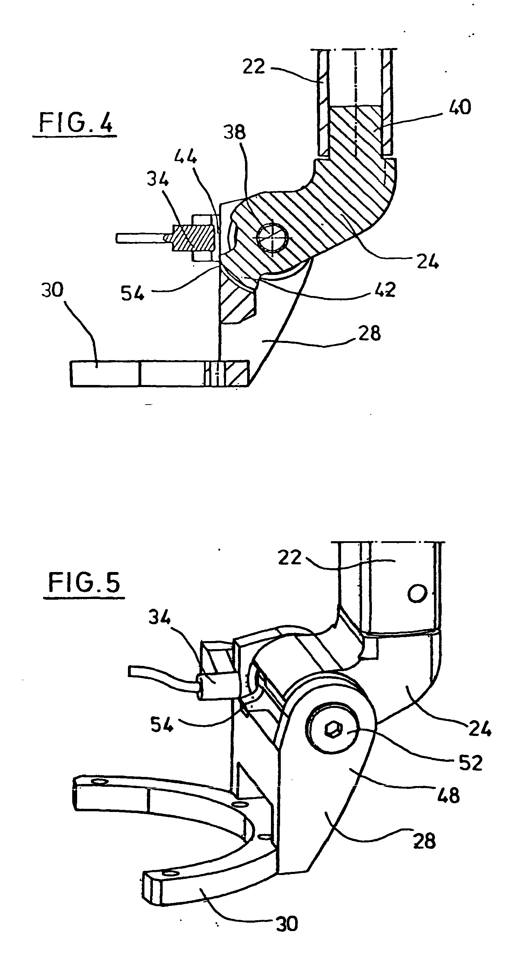

In den Figuren 4 und 5 ist in den Figuren 2 und 3 entsprechenden Ansichten dieselbe Vorrichtung bei einer anderen Stellung der Deichsel 20 gezeigt. Die Deichsel 20 befindet sich in einer vertikalen, d.h. vollständig hochgeklappten Stellung, so dass sich das Gegenstück 42 gegenüber der Stellung der Deichsel 20 aus Figuren 2 und 3 weiter unten befindet. Insbesondere ist das Gegenstück 42 in Umfangsrichtung der Drehbewegung von der aktiven Fläche 44 des Sensors 34 beabstandet. Der Sensor 34 spricht daher nicht auf das Gegenstücks 42 an, sondern erfasst, dass sich die Deichsel 20 außerhalb eines mit der Erstreckung des Gegenstücks 42 in Umfangsrichtung korrespondierenden Winkelbereichs befindet.

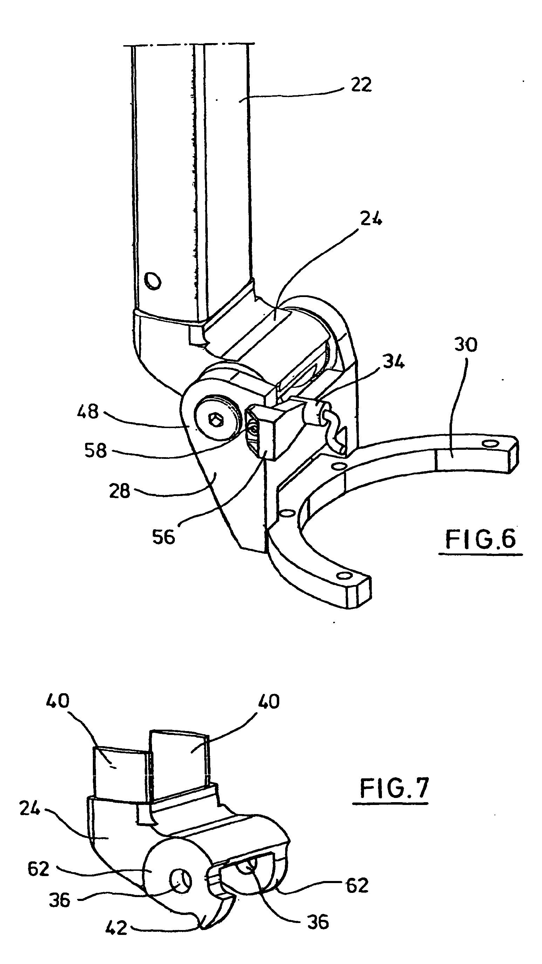

Fig. 6 entspricht im Wesentlichen der Darstellung der Fig. 1. Wegen der abweichenden Perspektive und der vergrößerten Darstellung ist insbesondere die Anordnung des Sensors 34 und dessen Befestigung am Deichselbock 28 besser erkennbar. Der Sensor 34 ist kreiszylindrisch, wobei seine aktive Sensorfläche 44 von einer vorderen, kreisförmigen Stirnfläche des Zylinders gebildet wird. Das Gehäuse 56 des Sensors 34 erstreckt sich von dem zylindrischen Abschnitt seitlich bis zum in der Figur vom angeordneten Ende der scheibenförmigen Halterung 48, wo es im rechten Winkel abgewinkelt und mit einer Schraube 58 an der Halterung 48 befestigt ist.

Fig. 7 zeigt den Deichselfuß 24, wobei insbesondere zwei Bohrungen 36 in seitlichen, scheibenförmigen Abschnitten 62 des Deichselfußes 24 erkennbar sind. An dem in der Fig. 7 vom befindlichen scheibenförmigen Abschnitt 62 befindet sich ferner das Gegenstück 42, das einteilig mit dem Deichselfuß 24 ausgebildet ist. Die Bohrungen 36 legen die Position der horizontalen Achse 32 bezüglich des Deichselfußes 24 fest. Am von den Bohrungen 36 abgewandten Ende des Deichselfußes befinden sich zwei Stege 40, die der Befestigung des Rohrs 22 der Deichsel 20 dienen.

Die Figuren 8 und 9 zeigen den Sensor 34 mit seinem Gehäuse 56 in zwei unterschiedlichen Ansichten. Das Gehäuse 56 weist einen zylindrischen Abschnitt 58 auf, in dem der Sensor 34 angeordnet ist. Ausgehend vom zylindrischen Abschnitt 58 erstreckt sich ein sich dreieckig verbreitender Steg 66, der radial zu dem zylindrischen Abschnitt 58 angeordnet ist. Der Steg 66 mündet in ein abgewinkeltes Endstück 68, das eine dem zylindrischen Abschnitt 58 zugewandte Anlagefläche 70 aufweist. Aus der Anlagefläche 70 stehen in einem seitlichen Abstand voneinander zwei Positionierstifte 72 vor; zwischen den Positionierstiften 72 ist eine Bohrung 74 für die Schraube 58 angeordnet.

Die Fig. 10 zeigt eine perspektivische Ansicht des Deichselbocks 28 mit seinen beiden scheibenförmigen Halterungen 48, die jeweils eine Bohrung 60 zur Aufnahme der Schwenkachse 38 aufweisen. Die beiden scheibenförmigen Halterungen 48 sind von einem Quersteg 50 verbunden. Der Quersteg 50 weist an einer der horizontalen Achse 32 zugewandten Seite eine Ausnehmung 78 auf, um eine ungehinderte Bewegung des Gegenstücks 42 zu ermöglichen. Die in der Fig. 10 vom dargestellte scheibenförmige Halterung 48 weist zwei Positionierbohrungen 80 auf, in die die Positionierstifte 72 des Gehäuses 56 des Sensors 34 eingesetzt werden können. Die Bohrungen 80 sind von einer Anlagefläche 82 umgeben, die eine Begrenzung beim Einsetzen des Sensorgehäuses 56 bildet und in Anlage mit der Anlagefläche 70 des Gehäuses 56 gelangt. Zwischen den beiden Positionierbohrungen 80 ist eine Gewindebohrung 84 ausgebildet, die die Befestigungsschraube 58 für das Gehäuse 56 aufnimmt.

Auf die Figuren 11 bis 13, die eine bekannte Vorrichtung zeigen, ist bereits in der Beschreibungseinleitung eingegangen worden.

## Patentansprüche

1. Vorrichtung zur Erfassung einer vertikalen Deichselstellung eines Flurförderzeugs mit
• einer an einem Deichselbock (28) angelenkten Deichsel (20), die gegenüber dem Deichselbock (28) um eine horizontale Achse (32) schwenkbar ist,
• einem Sensor (34) zur berührungslosen Erfassung der Position eines Gegenstücks (42), wobei
• der Sensor (34) bezüglich des Deichselbocks (28) und das Gegenstück (42) bezüglich der Deichsel (20) fest angeordnet ist oder umgekehrt und
• der Sensor (34) eine aktive Sensorfläche (44) aufweist, an der das Gegenstück (42) bzw. die an dem Gegenstück (42) bei einer Bewegung der Deichsel (20) gegenüber dem Deichselbock (28) vorbeigeführt wird, **dadurch gekennzeichnet, dass**
• eine Flächennormale der aktiven Sensorfläche (44) bezüglich der horizontalen Achse (32) radial angeordnet ist.

2. Vorrichtung nach Anspruch 1, **dadurch gekennzeichnet, dass** der Sensor (34) ein induktiver oder kapazitiver Sensor (34) ist.

3. Vorrichtung nach Anspruch 1 oder 2, **dadurch gekennzeichnet, dass** der Sensor (34) in Abhängigkeit von der vertikalen Deichselstellung ein Ein/Aus-Signal zur Verfügung stellt.

4. Vorrichtung nach einem der Ansprüche 1 bis 3, **dadurch gekennzeichnet, dass** das Gegenstück (42) so geformt und bezüglich des Sensors (34) so angeordnet ist, dass der Sensor (34) zwischen einer vorgegebenen unteren Stellung der Deichsel (20) und einer vorgegebenen oberen Stellung der Deichsel (20) ein konstantes Ausgangssignal erzeugt.

5. Vorrichtung nach einem der Ansprüche 1 bis 4, **dadurch gekennzeichnet, dass** eine mit der aktiven Sensorfläche (44) des Sensors (34) zusammenwirkende Fläche (54) des Gegenstücks (42) im gleichen Schritt der mechanischen Bearbeitung der Deichsel (20) bzw. des Deichselbocks (28) herstellbar ist wie eine weitere Fläche der Deichsel (20) bzw. des Deichselbocks (28), die die Position der horizontalen Achse (32) bezüglich der Deichsel (20) bzw. des Deichselbocks (32) festlegt.

6. Vorrichtung nach einem der Ansprüche 1 bis 5, **dadurch gekennzeichnet, dass** das Gegenstück (42) und ein Fuß der Deichsel (20) bzw. das Gegenstück (42) und der Deichselbock (28) einteilig ausgebildet sind.

7. Vorrichtung nach einem der Ansprüche 1 bis 6, **dadurch gekennzeichnet, dass** der Deichselbock (28) bzw. die Deichsel (20) bearbeitete Flächen aufweist, die mit einem Gehäuse (56) des Sensors (34) zusammenwirken, so dass die Position der aktiven Sensorfläche (44) durch die bearbeiteten Flächen eindeutig vorgegeben ist.

8. Vorrichtung nach Anspruch 7, **dadurch gekennzeichnet, dass** die bearbeiteten Flächen mindestens eine Positionierbohrung (80) und/oder mindestens einen Positionierstift und eine senkrecht zu der Positionierbohrung (80) und/oder zu dem Positionierstift ausgerichtete Anlagefläche (82) aufweisen.

9. Vorrichtung nach Anspruch 7 oder 8, **dadurch gekennzeichnet, dass** die bearbeiteten Flächen bei der Fertigung des Deichselbocks (28) bzw. der Deichsel (20) im gleichen Schritt der mechanischen Bearbeitung herstellbar sind wie eine weitere Fläche, die die Position der horizontalen Achse (32) bezüglich des Deichselbocks (28) bzw. der Deichsel (20) festlegt.

10. Vorrichtung nach Anspruch 8 oder 9, **dadurch gekennzeichnet, dass** die mindestens eine Positionierbohrung (80) und/oder der mindestens eine Positionierstift in Richtung der horizontalen Achse (32) angeordnet ist.

11. Flurförderzeug mit einer Vorrichtung zur Erfassung einer vertikalen Deichselstellung eines Fluförderzeugs nach einem der Ansprüche 1 bis 10.

12. Flurförderzeug nach Anspruch 11, **gekennzeichnet durch** eine Bremseinrichtung, die ein angetriebenes oder nicht angetriebenes Rad des Flurförderzeugs in Abhängigkeit von einem Ausgangssignal des Sensors (34) bremst.

13. Flurförderzeug nach Anspruch 11 oder 12, **gekennzeichnet durch** eine Steuereinrichtung, die einen Fahrantrieb in Abhängigkeit von einem Ausgangssignal des Sensors (34) aktiviert oder abschaltet oder in einer beliebigen anderen Funktion beeinflusst.

## Claims

1. A device for detecting a vertical tiller arm position of an industrial truck, with
• a tiller arm (20), hinged to a tiller block (28) and pivoting around a horizontal axis (32) with respect to the tiller block (28),
• a sensor (34) for non-contact detection of the position of a counter piece (42), wherein
• the sensor (34) is fixedly arranged with respect to the tiller block (28), and the counter piece (42) with respect to the tiller arm (20) or vice versa, and
• the sensor (34) has an active sensor surface (44), along which the counter piece (42) moves or which moves along the counter piece (42) in a movement of the tiller arm (20) with respect to the tiller block (28), **characterised in that**
• a surface normal of the active sensor surface (44) is arranged radially with respect to the horizontal axis (32).

2. The device according to claim 1, **characterised in that** the sensor (34) is an inductive or capacitive sensor (34).

3. The device according to claim 1 or 2, **characterised in that** the sensor (34) provides an on/off-signal depending on the vertical tiller arm position.

4. The device according to any one of claims 1 to 3, **characterised in that** the counter piece (42) is shaped such and arranged such with respect to the sensor (34) that the sensor (34) generates a constant output signal between a given lower position of the tiller arm (20) and a given upper position of the tiller arm (20).

5. The device according to any one of claims 1 to 4, **characterised in that** a surface (54) of the counter piece (42) co-operating with the active sensor surface (44) of the sensor (34) can be made in the same step of the mechanical processing of the tiller arm (20) or of the tiller block (28) as a further surface of the tiller arm (20) or of the tiller block (28), which determines the position of the horizontal axis (32) with respect to the tiller arm (20) or the tiller block (28).

6. The device according to any one of claims 1 to 5, **characterised in that** the counter piece (42) and a foot of the tiller arm (20) or the counter piece (42) and the tiller block (28) are formed in one piece.

7. The device according to any one of claims 1 to 6, **characterised in that** the tiller block (28) or the tiller arm (20) have machined surfaces which co-operate with a casing (56) of the sensor (34), so that the position of the active sensor surface (44) is unambiguously given by the machined surfaces.

8. The device according to claim 7, **characterised in that** the machined surfaces have at least one positioning bore (80) and/or at least one positioning pin, and a bearing surface (82) which is aligned vertically to the positioning bore (80) and/or to the positioning pin.

9. The device according to claim 7 or 8, **characterised in that** in the production of the tiller block (28) or the tiller arm (20), the machined surfaces can be made in the same step of the mechanical processing as a further surface which determines the position of the horizontal axis (32) with respect to the tiller block (28) or the tiller arm (20).

10. The device according to claim 8 or 9, **characterised in that** the at least one positioning bore (80) and/or the at least one positioning pin are/is disposed in the direction of the horizontal axis (32).

11. The industrial truck with a device for detecting a vertical tiller arm position of an industrial truck according to any one of claims 1 to 10.

12. The industrial truck according to claim 11, **characterised by** a braking device which brakes a driven or not driven wheel of the industrial truck, depending on an output signal of the sensor (34).

13. The industrial truck according to claim 11 or 12, **characterised by** a control device which activates or shuts off or influences in any arbitrary other function a travel drive, depending on an output signal of the sensor (34).

## Revendications

1. Dispositif pour détecter une position de timon verticale d'un transpalette, avec
• un timon (20), articulé à un bloc de timon (28) et pivotant autour d'un axe horizontal (32) par rapport au bloc de timon (28),
• un capteur (34) pour la détection sans contact de la position d'un pendant (42), dans lequel
• le capteur (34) est arrangé de manière fixe par rapport au bloc de timon (28), et le pendant (42) par rapport au timon (20) ou vice versa, et
• le capteur (34) a une surface de capteur active (44), devant laquelle le pendant (42) passe ou qui passe devant le pendant (42) dans un mouvement du timon (20) par rapport au bloc de timon (28), **caractérisé en ce que**
• une normale de surface de la surface de capteur active (44) est disposée de manière radiale par rapport à l'axe horizontal (32).

2. Dispositif selon la revendication 1, **caractérisé en ce que** le capteur (34) est un capteur (34) inductif ou capacitif.

3. Dispositif selon la revendication 1 ou 2, **caractérisé en ce que** le capteur (34) fournit un signal d'ouverture/fermeture en fonction de la position de timon verticale.

4. Dispositif selon l'une quelconque des revendications 1 à 3, **caractérisé en ce que** le pendant (42) est formé de telle façon et arrangé de telle façon par rapport au capteur (34) que le capteur (34) génère un signal de sortie constant entre une position inférieure donnée du timon (20) et une position supérieure donnée du timon (20).

5. Dispositif selon l'une quelconque des revendications 1 à 4, **caractérisé en ce que** une surface (54) du pendant (42) qui coopère avec la surface de capteur active (44) du capteur (34) peut être fabriquée dans la même étape du façonnage mécanique du timon (20) ou du bloc de timon (28) comme une autre surface du timon (20) ou du bloc de timon (28), qui détermine la position de l'axe horizontal (32) par rapport au timon (20) ou au bloc de timon (28).

6. Dispositif selon l'une quelconque des revendications 1 à 5, **caractérisé en ce que** le pendant (42) et un pied du timon (20) ou le pendant (42) et le bloc de timon (28) sont formés en une seule pièce.

7. Dispositif selon l'une quelconque des revendications 1 à 6, **caractérisé en ce que** le bloc de timon (28) ou le timon (20) ont des surfaces façonnées qui coopèrent avec un boîtier (56) du capteur (34), de sorte que la position de la surface de capteur active (44) est donnée sans équivoques par les surfaces façonnées.

8. Dispositif selon la revendication 7, **caractérisé en ce que** les surfaces façonnées ont au moins un trou de positionnement (80) et/ou au moins une broche de positionnement, et une surface de siège (82) qui est verticalement alignée au trou de positionnement (80) et/ou à la broche de positionnement.

9. Dispositif selon la revendication 7 ou 8, **caractérisé en ce que** dans la fabrication du bloc de timon (28) ou du timon (20), les surfaces façonnées peuvent être fabriquées dans la même étape du façonnage mécanique comme une autre surface qui détermine la position de l'axe horizontal (32) par rapport au bloc de timon (28) ou au timon (20).

10. Dispositif selon la revendication 8 ou 9, **caractérisé en ce que** l'au moins un trou de positionnement (80) et/ou l'au moins une broche de positionnement est disposé dans la direction de l'axe horizontal (32).

11. Transpalette avec un dispositif pour détecter une position de timon verticale d'un transpalette selon l'une quelconque des revendications 1 à 10.

12. Transpalette selon la revendication 11, **caractérisé par** un dispositif de freinage qui freine une roue entraînée ou non entraînée du transpalette en fonction d'un signal de sortie du capteur (34).

13. Transpalette selon la revendication 11 ou 12, **caractérisé par** un dispositif de commande qui active ou débranche ou influence de n'importe quelle autre fonction un entraînement de marche en fonction d'un signal de sortie du capteur (34).
